# EUROPEAN PATENT APPLICATION

(11) **EP 1 246 149 A1**
(43) Date of publication of application: **02.10.2002**
(21) Application number: 00961241.7
(22) Date of filing: 26.09.2000
(51) Int. Cl.: G08B 25/08, G08B 25/01, H04N 7/18

(54) **SECURITY SYSTEM USING INTERNET**

(30) Priority: 12.11.1999 JP 32285799; 17.08.2000 JP 2000287733
(71) Applicant: Future Amenity Line Kabushiki Kaisha, Shizuoka-shi, Shizuoka 422-8005 (JP)
(72) Inventor: TAKADA, Hidetoshi, Shizuoka-shi, Shizuoka 422-8004 (JP)
(74) Representative: Grünecker, Kinkeldey, Stockmair & Schwanhäusser Anwaltssozietät
(86) International application number: JP0006630
(87) International publication number: WO01037237

(57) **Abstract**

A conventional machine security system is extremely expensive and has limited functions. According to the invention, an item to be guarded such as a vending machine (1) is equipped with an abnormality detection sensor such as a burglar sensor (3), an emergency call button (5), and a monitoring camera (10). The video shot by the monitoring camera are captured and recorded as still images at predetermined intervals. If a signal is inputted from the abnormality detection sensor, the system is connected to a security business via the Internet (40), reads from the data file the identification data about the place where the item is installed and the manager list of the item and an emergency message corresponding to the sensor which has operated and sends them by chat, reads out several still images before and after the emergency signal input, and sends them by E-mail. Therefore, the equipment on the data sending side can be mainly constituted of a general-purpose computer, and the security business needs only one telephone line, lowering the cost and missing no reports. The emergency call is useful for making people safe too.

## Description

### TECHNICAL FIELD

The present invention relates to a security system using the Internet in a computer network to which a computer or a portable information terminal is connected, which automatically sends a message of an emergency to a security business, occurring at an object to be guarded under a contract with the security business.

### BACKGROUND ART

As of this date, as an unmanned security system for guarding private residences or business establishments using a telephone line, the so-called "machine security system" stipulated by the guard law is generally known. In this security system, an object to be guarded is equipped with various sensors that output specific signals when the keys and windows and so forth are opened illegally, and a transmitter that transmits a specific abnormality signal to a security business via a telephone line, when there appeared a signal input from these sensors; and the security business is equipped with a line controller that switches the telephone lines for the number of customers, a monitor and so forth.

In part, a monitoring camera is installed together with the sensors, and the video information taken by the camera is transmitted to the security business.

In such a machine security system, since the installations are made up with special specifications, the transmitter on the customer side and the line controller on the security business side become extremely costly, which is a problem.

Therefore, in case of an unprofitable object under a contract with a security business, such as a vending machine or a personal residence, etc., an inexpensive measure against crimes is taken under the present circumstances, such that the alarm is given when a safe, a locking, or the like is destroyed.

However, only ringing the alarm will scarcely produce an effect that prevents a crime such as a vending machine robbery. In order to enhance the effect, in addition to at least transmitting an outbreak of an emergency to the security business, etc., it is essential to transmit the video images in which the scene of a criminal act is shot as the evidence to the security business, etc.

Further, in the conventional security system, the function is confined to prevention of crimes to the object to be guarded, and there is not any room for an application to the other crime prevention control, for example, a use of sending such information that a person passing by the object to be guarded encountered a danger.

However in recent years, accompanied with progress in the computer networks and communication environments, the user number of the networks represented by the Internet has rapidly increased, and with this increase, the Web sites are increasing day by day.

Other than information equipment such as personal computers, portable information terminals, portable telephones, PHS, and information appliances such as Internet TV game equipment have been spreading widely. And, some portable telephone terminals contain a browsing function, whereby it becomes possible to read the Web page of the Internet from a portable telephone terminal.

Further, various types of digital cameras and video equipment and so forth have been developed.

### DISCLOSURE OF THE INVENTION

Accordingly, the present invention intends to solve the conventional problems, and provides a novel security system that holds down the equipment cost and running cost low, and yet allows reporting the video images in which the emergency of a crime or accident is shot to a security business in almost real time.

In order to solve the aforementioned problems, the invention set forth in Claim 1 is characterized by a security system using the Internet, which automatically reports information of an object to be guarded under a contract with a security business through the Internet to the security business, which includes: a monitoring camera that shoots the object to be guarded or a surrounding area thereof, an image record means that records image data shot by the monitoring camera, an abnormality detection sensor that detects an emergency and other circumstances occurring at the object to be guarded, a computer having a memory with an emergency report program stored, and at least a control circuit to execute the emergency report program, and a line connection means that connects the computer with wire communication lines including telephone lines and private lines, or with radio communication lines including radio communications and satellite communications, in which the emergency report program has a function to communicate with the Internet, and includes emergency report items including at least identification data of the object to be guarded, and in the processing thereof, when there is a signal input from the abnormality detection sensor, the system is connected to the Internet, and the emergency report items and still image data before and/or after the signal input, read from the image record means, are transmitted to a terminal of the security business.

In order to solve the problems, the invention set forth in Claim 2 is characterized by a security system using the Internet, which automatically reports information of an object to be guarded under a contract with a security business through the Internet to the security business, which includes: a monitoring camera that shoots the object to be guarded or a surrounding area thereof, an image record means that records image data shot by the monitoring camera, an abnormality detection sensor that detects an emergency and other circumstances occurring at the object to be guarded, a computer having a memory with an emergency report program stored, and at least a control circuit to execute the emergency report program, and a line connection means that connects the computer with wire communication lines including telephone lines and private lines, or with radio communication lines including radio communications and satellite communications, in which the emergency report program has a function to communicate with the Internet, and includes emergency report items including at least identification data of the object to be guarded, and in the processing thereof, when there is a signal input from the abnormality detection sensor, the system is connected to the Internet, and the emergency report items and still image data before and/or after the signal input, read from the image record means, are transmitted to a terminal of the security business, and next current images being shot by the monitoring camera are transmitted to the terminal of the security business.

In order to solve the problems, the invention set forth in Claim 3 is characterized by a security system using the Internet, which automatically reports information of an object to be guarded under a contract with a security business through the Internet to the security business, which includes: a monitoring camera that shoots the object to be guarded or a surrounding area thereof, an image record means that records image data shot by the monitoring camera, an abnormality detection sensor that detects an emergency and other circumstances occurring at the object to be guarded, a computer having a memory with an emergency report program stored, and at least a control circuit to execute the emergency report program, and a line connection means that connects the computer with wire communication lines including telephone lines and private lines, or with radio communication lines including radio communications and satellite communications, in which the emergency report program has a function to communicate with the Internet, and includes emergency report items including at least identification data of the object to be guarded, and in the processing thereof, when there is a signal input from the abnormality detection sensor, the system is connected to the Internet, and the emergency report items and current images being shot by the monitoring camera are transmitted to a terminal of the security business.

In these inventions, the communication between the object to be guarded and the security business can be carried out by means of the general mail server and the Web server and so forth that are used in the Internet communication. Therefore, at least as an equipment for reporting an emergency to be installed on the side of the object to be guarded, basically a general purpose computer, general purpose software required for the Internet communication such as a mail server and Web server, etc., and the emergency report program and so forth are only needed; and therefore, the equipment cost is considerably low. And, since the connection with the Internet is needed only when an emergency occurs, the running cost to the line rental fee and the like is extremely low.

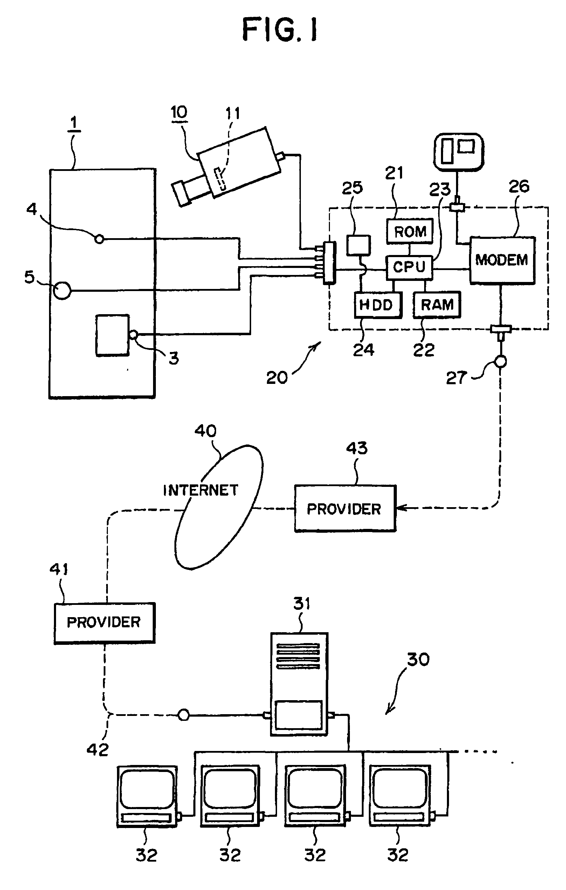

As a basic system configuration, Fig. 1 illustrates one example in which these systems are installed in one and the same system. However, if the emergency report program and the emergency report unit are located at separate places, or if the mail server and the Web server, etc., are located at separate places, these places can be specified and designated by the URL or the like. Accordingly, the system of the invention can be realized in such a system configuration.

Since the multiple packet data of the arriving emergency report items are only processed (recorded and displayed) in correspondence with the IP headers concerned, basically one telephone line is sufficient regardless of the number of the customers under the security contract; accordingly, the reception unit on the security business side can be equipped at by far a low cost compared with the conventional line controller.

And, in this invention, not only the emergency report items are transmitted to the security business almost at the same time with the outbreak of an emergency, but also the images of the spot before a criminal act or after a criminal act, or before and after a criminal act are transmitted to the security business in form of still images and animated images. Accordingly, in regard to the crimes of a burglar and arson, the evidence of the criminal act will be conserved with a considerably high provability. Therefore, the system is very useful to arresting the criminal and so forth, and demonstrates a high effect on prevention of crimes, etc.

In case the transmitted images are only the still images as in the invention set forth in Claim 1, or in case the transmitted images are both the still images and the animated images as in the invention set forth in Claim 2, the number of the still images may be any number more than one. However preferably, about two or three is desirable before or after the abnormality signal input regardless. With regard to the images before the abnormality signal input, the circuit may be configured in a manner that the image data shot by the monitoring camera are continuously captured and recorded at each appropriate time intervals (not necessarily regularly), for example, at every five seconds or at every ten seconds, and the image data are overwritten in order of the recording after it reaches a certain number.

In order to solve the problems, the invention set forth in Claim 4 is characterized by a security system using the Internet set forth in Claim 1 through Claim 3, in which the abnormality sensor is equipped with an emergency call button.

This invention is especially effective in case the object to be guarded is an object placed outdoors, for example, a vending machine and the like. If a person presses the emergency call button for any help, the circumstances of the spot where the person is present will be transmitted to the security business with the images. Accordingly, the necessary rescue activities such as dispatching a guard and reporting to the police or the fire station can be followed smoothly. Therefore, the invention is very useful not only to the guarding to the object to be guarded, but also to a general prevention of crimes and fire prevention in local areas, thus demonstrating a very great significance as the social existence.

Here, the "emergency call button" includes a general button type or shape that allows reporting by pressing a protrusion, and any one other than the button type or shape that realizes the same function by operation.

In order to solve the problems, the invention set forth in Claim 5 is characterized by a security system using the Internet set forth in Claim 1 through Claim 4, in which the emergency report items include plural emergency report messages corresponding to the types of the abnormality sensor, and the emergency report program searches for, when there is a signal input from the abnormality sensor, one corresponding to the type of the abnormality sensor out of the emergency report messages, and transmits it.

Accordingly, the security business is able to grasp the circumstances of the emergency now being occurring by both the images of the spot and the emergency report message, and immediately it is able to know more appropriate measures concretely.

In order to solve the problems, the invention set forth in Claim 6 is characterized by a security system using the Internet set forth in Claim 1 through Claim 5, in which the emergency report program is composed to transmit the emergency report items to be first transmitted to the security business at least by the chat information.

With this construction, the emergency report issued to the security business from the object to be guarded can be displayed forcibly and momentarily on the monitor screen on the security business side, which achieves an emergency report accompanying only a slight time delay to securely prevent an overlook of the report.

In this specification, the "chat" signifies the information transmission system including a real time mail and so forth by the alternative communication system on the Internet communication, which is referred to as the OLT (On Line Talk), and the "chat information" signifies the information to be transmitted to the security business by the information transmission system.

In order to solve the problems, the invention set forth in Claim 7 is characterized by a security system using the Internet set forth in Claim 1 or Claim 4 through Claim 6, in which, in the processing thereof, when there is a signal input from the abnormality detection sensor, the system is connected to the Internet, and the emergency report items and still image data before and/or after the signal input, read from the image record means, are transmitted to plural terminals of the security business.

In order to solve the problems, the invention set forth in Claim 8 is characterized by a security system using the Internet set forth in Claim 2 or Claim 4 through Claim 6, in which, in the processing thereof, when there is a signal input from the abnormality detection sensor, the system is connected to the Internet, and the emergency report items and still image data before and/or after the signal input, read from the image record means, are transmitted to a terminal of the security business, and next current images being shot by the monitoring camera are transmitted to the terminal of the security business.

In order to solve the problems, the invention set forth in Claim 9 is characterized by a security system using the Internet set forth in Claim 3 through Claim 6, in which, in the processing thereof, when there is a signal input from the abnormality detection sensor, the system is connected to the Internet, and the emergency report items and current images being shot by the monitoring camera are transmitted to a terminal of the security business.

### BRIEF DESCRIPTION OF THE DRAWINGS

Fig. 1 is a block diagram illustrating one example of the system configuration of a security system relating to the embodiment of the invention.
Fig. 2 is a chart illustrating one example of a monitor screen of a client computer on the security business side in the security system in Fig. 1.
Fig. 3 is a chart illustrating one example of data written in an emergency report program that is used in the security system in Fig. 1.
Fig. 4 is a chart illustrating one example of a flow of the emergency report program that is used in the security system in Fig. 1.
Fig. 5 is a chart illustrating one example of a flow of an emergency message reception program that is used in the security system in Fig. 1.
Fig. 6 is a chart illustrating a first modified example of a flow of the emergency report program that is used in the security system in Fig. 1.
Fig. 7 is a chart illustrating a second modified example of a flow of the emergency report program that is used in the security system in Fig. 1.

In the foregoing drawings, the numerical symbol 1 denotes an object to be guarded, the symbol 3 an abnormality detection sensor, the symbol 4 an abnormality detection sensor, the symbol 5 an abnormality detection sensor (emergency call button), the symbol 10 a monitoring camera, the symbol 23 a control circuit, the symbol 24 a memory, an image record means, the symbol 26 a telephone line connecting means, and the symbol 40 the Internet.

### THE BEST MODE FOR CARRYING OUT THE INVENTION

The basic mode for carrying out the invention will be described with reference to the accompanying drawings.

Fig. 1 is a block diagram illustrating one example of the basic configuration of a security system relating to the invention. This example illustrates a system configuration, in which a vending machine 1 set up outdoors is assumed as the object to be guarded.

The security system using the Internet of this invention is equipped with a monitoring camera to shoot the object to be guarded or the area surrounding it.

A monitoring camera 10 is placed near the vending machine 1. Preferably, this monitoring camera 10, containing a CCD-type solid-state pickup device 11, is installed at such an angle that the shooting lens can capture the front of the vending machine 1 and the peripheral area thereof as an object.

Next, the security system using the Internet of this invention is furnished with an abnormality detection sensor that detects an emergency and other circumstances occurring at the object to be guarded.

### [A-1. Sensors for the object to be guarded]

A burglar sensor 3, a fire sensor 4, and an emergency call button 5 are installed to the vending machine 1. The burglar sensor 3 is a sensor that operates to output a specific signal when someone breaks open the front door or the cashbox of the vending machine 1 to remove the fixing part.
The fire sensor 4 is a temperature sensor that outputs a specific signal when detecting a temperature higher than the operational temperature. The emergency call button 5 is a push button switch that an operator presses when a passerby or the like needs help who encounters any danger, for example, being attacked by a rowdy or a physical condition being brought into a sudden wreck; and as the operator presses the push button, this emergency call button outputs a specific signal.

Next, the security system using the Internet of this invention is furnished with an image record means that records image data shot by the monitoring camera. The image record means is a storage unit as illustrated by an external storage unit 24.

And, the security system using the Internet of this invention is provided with a computer possessing a memory where an emergency report program is stored, and a control circuit that executes at least the emergency report program, which represents an emergency report unit 20.

Here, the emergency report unit 20 to connect the network is generally a terminal such as a personal computer or a work station; and it can also be a radio communication terminal such as a portable telephone or PHS, a portable information terminal incorporating these functions, a dedicated terminal such as a game equipment or an Internet TV, or various types of computer terminals such as a TV conference system.

Also, the emergency report unit 20 may be an electrical apparatus with a computer built in, for example, the so-called information appliance such as game equipment and televisions.

### [A-3. Emergency report unit]

The symbol 20 denotes the emergency report unit, which has a function that transmits specific emergency report items and images shot by the monitoring camera to a security business, by using either of a signal (hereunder, mentioned as "abnormality signal" ) outputted from the sensors 3, 4 and the emergency call button 5 and a time-up signal checked at a fixed time, which will be described later, as a triggering signal.
The emergency report unit 20 is installed inside a building under the control of a person in charge of managing the vending machine 1 as a routine work, for example, a shop, personal dwelling, and various types of establishments, which includes the external storage unit 24 such as a hard disk drive, an image capture circuit 25, telephone line connecting modem (signal modulator demodulator) 26 and so forth, in addition to a ROM 21, RAM 22, and CPU 23 that constitute a microcomputer.

The ROM 21 stores the BIOS (basic input output system) program.

Other than the OS (operation system) program, the external storage unit 24 stores required programs such as the emergency report program including the procedure for communicating with the Internet, which will be described later. Also, the external storage unit 24 stores the images that the monitoring camera 10 shoots, and various data produced by this emergency report program and so forth. The CPU 23 executes the control instructions to the whole circuit of the emergency report unit 20, and various types of operations.

The RAM 22 temporarily stores the data of operation results executed by the CPU 23, in addition to the OS stored in the external storage unit 24 and the emergency report program. The image capture circuit 25 captures one frame of the image signals outputted from the monitoring camera 10 each at every constant intervals of time, for example, at every ten seconds, compresses it, and outputs the result to the external storage unit 24. The external storage unit 24 records the images, and after the number of the recorded images reaches a specific storage number, the external storage unit 24 executes the recording endlessly in a manner to overwrite one recording after another. Therefore, the external storage unit 24 records to hold the most recent still images for the specific storage number. And, the modem 26 is connected to the modular jack 27 to a telephone line.

And, the security system using the Internet of this invention is furnished with a line connection means that connects the computer with wire communication lines including telephone lines and private lines, or with radio communication lines including radio communications and satellite communications.

### [A-4. Reception system on a security business side]

The symbol 30 represents an emergency message reception unit that receives various data transmitted from the emergency report unit 20 to a security business through the Internet 40. The emergency message reception unit 30 possesses a server computer 31 furnished with a central control unit, a required memory, and a modem, etc., and multiple client computers 32 installed in a control room. The server computer 31, being provided with a mail server function and a Web page function, is connected to a specified provider 41 on the Internet 40 that the security business made a contract with, by means of a private line 42 through a modem, and to the client computers 32.

Further, the line connection means includes connection modes to the wire communication lines including telephone lines and private lines, or the radio communication lines including radio communications and satellite communications; accordingly, it includes various types of connection modes to the private lines where the provider 41 does not intervene.

The mail information and image data transmitted to the security business from the manager of the vending machine 1 and the emergency report unit 20 of many guard contractors arrive at the server computer 31 from another provider 43 with whom the guard contractor makes the contract via a routine line on the Internet 40 and the provider 41. The signals arrived at the server computer 31 are processed according to the classification of the 'chat information', 'mail information', and 'image data'; and the signals are displayed in sequence on the monitor screens of the client computers 32, and are recorded in the log file of the server computer 31.

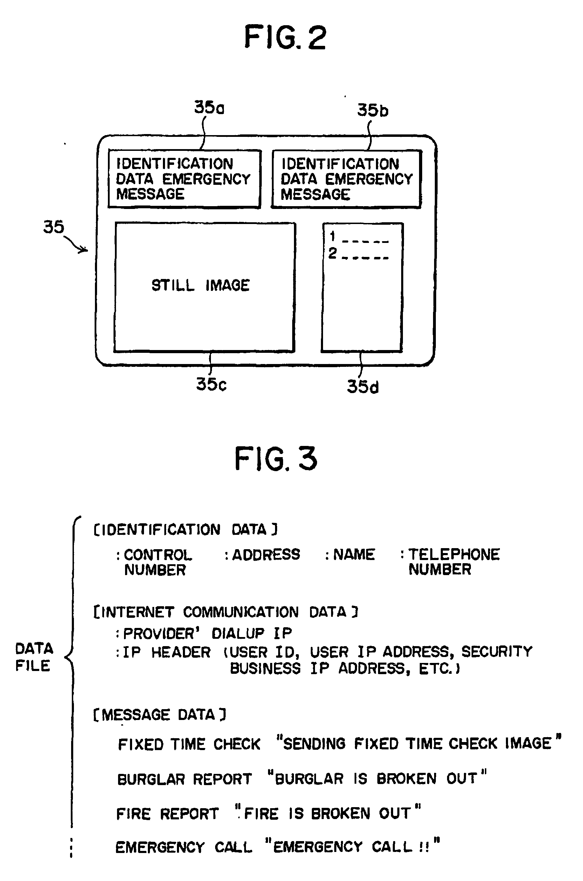

Fig. 2 illustrates one example of a display screen given on the monitor screen of a client computer 32. This screen 35 includes a 'newly-arrived chat information window'35a and a 'newly-arrived mail information window'35b left and right on the upper area of the screen, a 'newly-arrived image display window'35c on the lower left, and a 'message list window'35d on the lower right. The chat information as the so-called first report of an emergency message is displayed on the 'newly-arrived chat information window'35a, the mail information as the second report is displayed on the 'newly-arrived mail information window'35b, and the still images for five frames shot by the monitoring camera 10 are displayed on the newly-arrived image display window'35c.

And, from a state that information from one object to be guarded are displayed, when the client computer 32 receives emergency report items concerning another object to be guarded, the information of the object to be guarded which have been displayed so far are sequentially loaded into the 'message list window'35d.

### [B. Emergency report program]

Next, the emergency report program stored in the external storage unit 24 will be described.

The emergency report program includes a system file and a data file.

### [B-1. Data file] (Figure 3)

The data file is loaded with an identification data, a message data, and a data for communicating with the Internet.

The identification data is a data inherent to the object to be guarded, which includes the control number of the object to be guarded, the address of the manager (or the location of the object to be guarded), the name of the manager, and the telephone number, and so forth.

The data for communicating with the Internet includes the IP header (user ID, user IP address, IP address of the security business, etc.) as well as the dial-up IP of the provider, and so forth.

The IP address in this case is assumed to include, in addition to the IP version 4 now being used, a revised version such as the IP version 6, which will be adopted for provision against the coming circumstances that the IP address is going to be insufficient owing to the rapid propagation of the Internet. And, the IP address includes all the identification information that uniquely identify a server on the network in the same manner as the IP address in case of using the TCP/IP as the communication protocol, such as a private address in case of using the TCP/IP in a closed network like a network inside a firm, such as the Intranet that is not connected to the Internet.

The message data includes a fixed time check message saying "sending fixed time check image", and three types of emergency messages: a burglar reporting message saying "burglar is broken out" when the burglar sensor 3 functions, a fire reporting message saying "fire is broken out" when the fire sensor 4 functions, and an emergency call message saying "emergency call" when the emergency call button 5 is pressed.
The fixed time check message is a message that is circulated when transmitting the still images, etc., every preset check intervals (36 hours), in order that the security business periodically confirms whether the angle of the monitoring camera 10 is correctly maintained, whether the emergency report unit 20 is normally working, and so forth.

When a signal from the burglar sensor 3 is inputted, "burglar is broken out" is transmitted, when a signal from the fire sensor 4 is inputted, "fire is broken out" is transmitted, and a signal by the emergency call button 5 is inputted, "emergency call" is transmitted.

### [B-2. Flow of the system file]

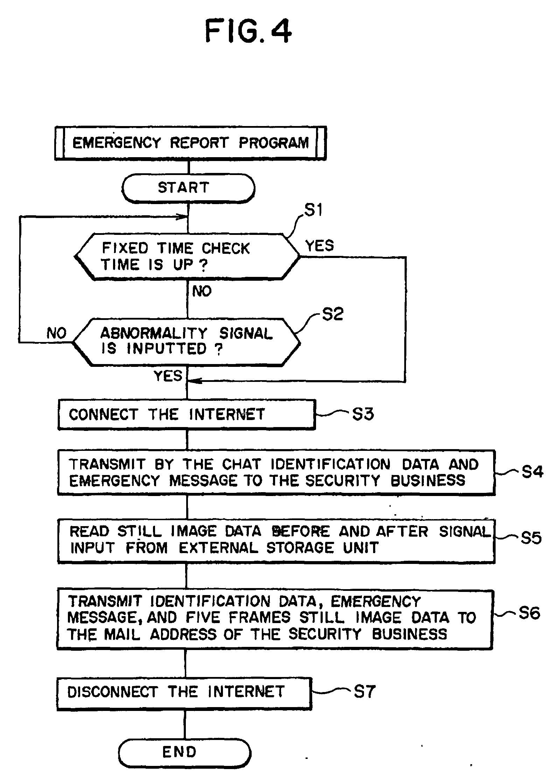

The system file of the emergency report program is provided with a function to transmit and receive E-mails and a function to transmit data to a Web page by using the Internet, and program functions necessary for communicating with the Internet, such as the chat. The flow is shown in Fig. 4. The flow will be described according to the order of the step. (In this drawing and the other drawings that illustrate the flows, the symbol "S" and the numeral signify the step number in that flow.)

Here, the basic processing flow illustrated in the detailed description of the invention is one example of the flow relating to the invention shown in each of the claims, it is not confined to this, and it includes processing flows that perform similar functions and operations.

Step 1 "Fixed time check time is up?" judges whether or not the check interval (36 hours) passed after starting the program or after the previous check time and the fixed time check time comes; and if yes, the step jumps to Step 3, and if no, it goes to Step 2.

Step 2 "Abnormality signal is inputted?" judges whether or not a signal is inputted from any of the two sensors 3, 4 and the emergency call button 5; and if yes, the step goes to Step 3, and if no, it returns to Step 1.

Step 3 "Connect to the Internet" reads the dial-up IP of the provider 43 and the IP address of the security business, etc., and dials the number to connect the line to the provider 43.

Otherwise the step can take a connection mode by the continuous connection using a telephone line, private line, and CATV line, etc., except for the dial-up connection. In case of the continuous connection, the transmission and reception of data are carried out without passing the steps of connection and disconnection.

Step 4 "Transmit by the chat identification data and emergency message to the security business" reads the fixed time check message in case the fixed time check time is up, with regard to the emergency message; and in case of a signal input from the burglar sensor 3, fire sensor 4, or the emergency call button 5, reads the message corresponding to the sensor.

Step 5 "Read still image data before and after signal input from external storage unit" reads the still images for three frames before the abnormality signal input (or before the check time being up), and the still images for two frames after the abnormality signal input (or after the check time being up).

Step 6 "Transmit identification data, emergency message, and still image data read out for five frames to the mail address of the security business" . The identification data and the emergency message transmitted here are basically the same as the chat information that was transmitted at Step 4, and the information with the still images for five frames attached are transmitted by mail.

The transmission at Step 4 is the first report, and the transmission at Step 6 is the second report accompanied with the images.

Step 7 "Disconnect the Internet connection" . Since the specified data transmission is completed, the Internet connection is disconnected. In case of the continuous connection, the connection is maintained.

Here, it is conceivable to divide the transmission at Step 6 (second report) into, first, transmitting only the still images before the abnormality signal input (or before the check time being up), thereafter transmitting the still images after the abnormality signal input (or after the check time being up).

### [C. Emergency message reception program]

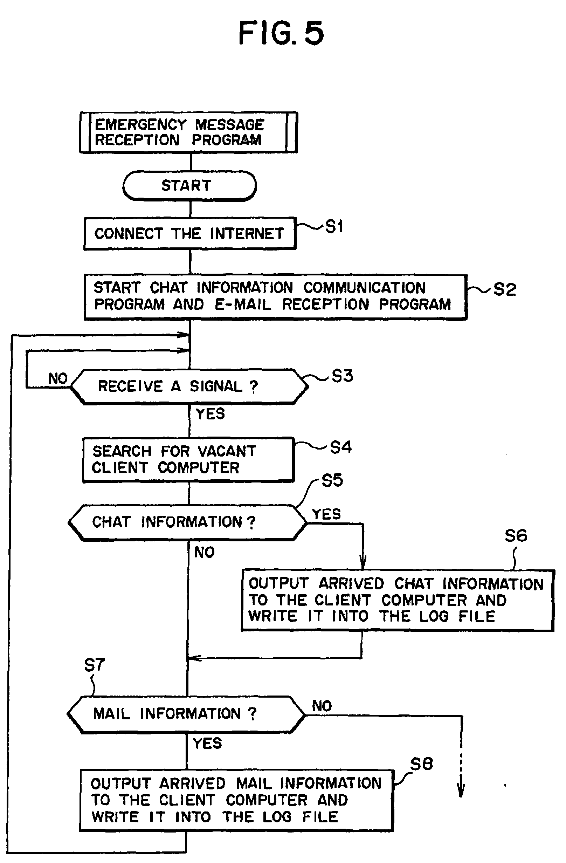

The data transmitted to the security business by the foregoing procedure is processed by means of the "emergency message reception program" (Fig. 5), which is stored in the main storage unit of the server computer 31 on the security business side. The flow of the emergency message reception program will be described according to the order of the steps.

Step 1 "Connect to the Internet" dials up the provider 41 with whom the security business makes a contract to connect the line to the Internet. As a rule, this connection will not be disconnected.

Otherwise the step can take a connection mode by the continuous connection using a telephone line, private line, and CATV line, etc., except for the dial-up connection. In case of the continuous connection, the transmission and reception of data are carried out without passing the steps of connection and disconnection.

Step 2 "Start chat information communication program and e-mail reception program" . The system immediately comes to a state to process information by the chat transmission and information by the mail transmission, and it will not be possible as a rule to end this starting. The steps so far complete the preparation to receive the emergency message.

Step 3 "Receive a signal?" judges whether or not a signal is received from any of the objects to be guarded, and waits until it is received. When received, the step goes to Step 4.

Step 4 "Search for vacant client computer" searches for the client computers 32 connected to the server computer 31 which are not capturing a signal, and opens the circuit with one of them.

Step 5 "Chat information?" If the arrived signal is the chat information, the step advances to Step 6; and if not, it advances to Step 7.

Step 6 "Output arrived information to the client computer and write it into the log file" . The arrived chat information is outputted to the vacant client computer 32 searched for at Step 4. Thereby, the identification data and emergency messages, etc., that are now transmitted, are displayed on the 'newly-arrived chat information window'35a of the client computer 32, that is, the first report of the emergency plunges into the control room.

Step 7 "Mail information?" judges whether the arrived signal is the mail information, namely, the arrived signal is the information by the electronic mail or not; and if yes, the step advances to Step 8; and if no, it advances to another step not illustrated.

Step 8 "Output arrived mail information to the client computer and write it into the log file". The mail information processed at this step is the data of the object to be guarded that relates to any of the chat information already arrived; therefore, the arrived mail information is outputted to the client computer that outputted the chat information at Step 4. Thereby, the identification data and emergency messages are displayed on the 'newly-arrived mail information window'35b of the screen 35 of the client computer concerned, and the still images are displayed on the newly-arrived image display window'35c, that is, the second report of the emergency plunges into the control room.

The step returns to Step 1, after processing Step 7.

It takes about 5 seconds until the emergency and the like occurred at the object to be guarded are reported to the security business and the chat information are displayed on the client computer 32 of the security business, and one to some minutes later, the still images before and after the outbreak of the emergency are displayed.

Thus, since the emergency of a burglar or the like is reported immediately after the outbreak to the security business with the concrete contents of the emergency, dispatching a guard and reporting to the police can be started almost at the same time with the outbreak of the emergency, and the circumstances of the spot can be grasped from the images arrived slightly later, the search of the offender and the rescue operations of the sufferer can be carried out with accuracy.

Especially, since the emergency report to the security business is carried out by means of the Internet communication using the chat function, the report can be displayed forcibly and momentarily on the client computer 32 on the security business side, thus securely preventing the report from being overlooked.

Besides, on the security business side, basically one telephone line is sufficient regardless of the number of the customers under the security contract, because the packets of the arriving emergency report are only distributed in correspondence with the IP headers.

In the foregoing example of the system file, it is assumed that the still images are transmitted to the security business both before and after the input of the abnormality signal, however occasionally, it can be arranged only before or after the input of the abnormality signal. This concept can be applied in the same manner in the whole security system, and all the image data transmitted from the objects to be guarded are not necessarily processed on one and the same basis. There are not any difficulties in making a construction including an object to be made to transmit the images only before the input of the abnormality signal, an object to be made to transmit the images only after the input of the abnormality signal, and an object to be made to transmit the images both before and after.

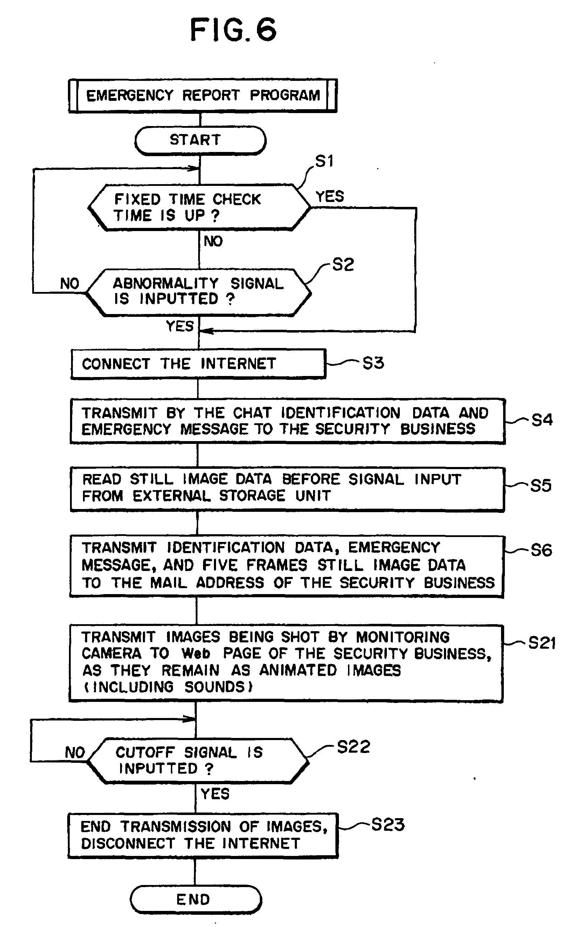

### [D. First modified example of the emergency report program] (Figure 6)

In the security system using the system configuration illustrated in Fig. 1, only a change of the emergency program will construct diverse variations of the system.

Fig. 6 illustrates the first modified example of the system file in the emergency report program. The flow of this system file differs from the flow of the system file illustrated in Fig. 4 only in that the images after the input of the abnormality signal are transmitted with the current images remaining intact as animated images. Accordingly, the description will be made only on the step having this difference, and the other steps will be given the same step numbers as those of the steps in Fig. 4, whereby the descriptions thereof will be omitted.

Step 5 "Read still image data before signal input from external storage unit". Thereby, the still images only before the signal input are to be transmitted at Step 6.

Step 21 "Transmit images being shot by monitoring camera to Web page of the security business, as they remain intact as animated images (including sounds)" . That is, after the abnormality signal is inputted, the images now being shot by the monitoring camera 10 and the sounds are transmitted continuously as they are. Accordingly, the current images surrounding the object 1 to be guarded are displayed as animated images on the 'newly-arrived image display window'35c of the client computer 32 of the security business, and the sounds picked up by the microphone of the monitoring camera 10 are outputted.

Step 22 "Cutoff signal is inputted?" The system waits for a cutoff signal to cut off transmission of the image data being inputted from the security business side. For example, the offender is already run away, when a guard arrives at the spot and judges that more images are not necessary, the security business side sends the cutoff signal.

Step 23 "End transmission of images, disconnect the Internet connection" . When the cutoff signal is inputted from the security business, the transmission of the images is finished, and the Internet connection is disconnected. In case of the continuous connection, the connection is maintained.

This program transmits the animated images after the outbreak of an emergency, which makes it possible to grasp the circumstances of the spot more clearly in detail, and to identify the image of the offender more clearly by the sounds from the spot, and to listen to the voice for rescue from a person who is meeting with the danger.

As the mode to transmit the still images and the animated images in this manner, there are some others conceivable. For example, if the processing at Step 5 of the flow in Fig. 6 is changed into "Read still image data after signal input from external storage unit" , it will produce a mode that transmits the still images after the abnormality signal input and the animated images thereafter. If Step 21 through Step 23 of the flow in Fig. 6 is inserted between Step 6 and Step 7 of the flow in Fig. 4, it will produce a mode that transmits the still images both before and after the abnormality signal input and the animated images thereafter.

When transmitting the animated images in this manner, it is necessary to start the Web page information reception program as well as the chat information communication program and the electronic mail reception program, at Step 2, in the emergency message reception program on the security business side.

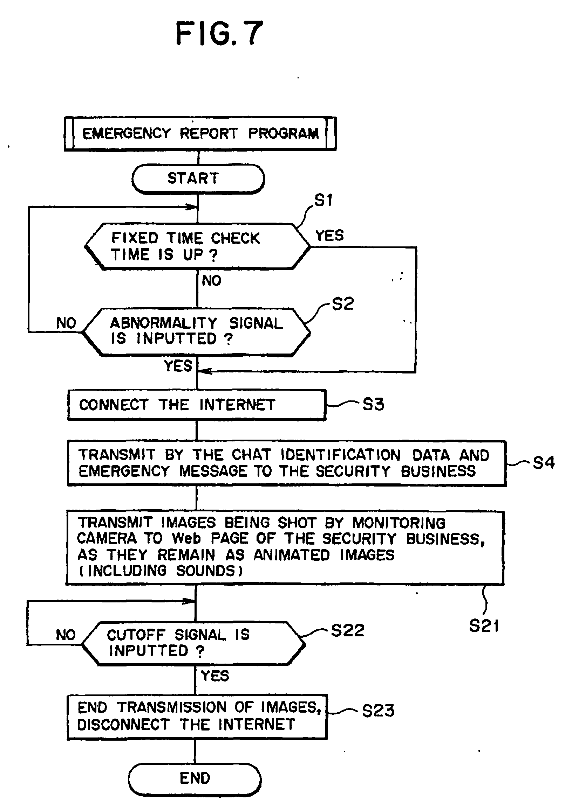

### [E. Second modified example of the emergency report program] (Figure 7)

Fig. 7 illustrates the second modified example of the system file in the emergency report program. The flow of this system file differs from the flow of the system file illustrated in Fig. 4 in that the image data are confined only to the animated images after the input of the abnormality signal.

Step 1 through Step 4 of the flow in Fig. 7 is the same as Step 1 through Step 4 of the flow in Fig. 4; and Step 21 through Step 23 is the same as Step 21 through Step 23 of the flow in Fig. 6.

When the emergency report program is configured as shown in Fig. 7, the image capture circuit 25 in the emergency report unit 20 is not necessarily required, and the output terminal from the monitoring camera 10 may be connected to the CPU 23 through a specified adaptor.

### [E. Third modified example of the emergency report program]

In the invention set forth in Claim 7, when there is a signal input from the abnormality detection sensor in the processing, the security system is connected with the Internet, and the emergency report items and the still image data before and/or after the signal input, read from the image record means, are transmitted to plural terminals of the security business.

In the invention set forth in Claim 8, when there is a signal input from the abnormality detection sensor in the processing, the security system is connected with the Internet, and the emergency report items and the still image data before and/or after the signal input, read from the image record means, are transmitted to a terminal of the security business, next the current images being shot by the monitoring camera are transmitted to the terminal of the security business.

In the invention set forth in Claim 9, when there is a signal input from the abnormality detection sensor in the processing, the security system is connected with the Internet, and the current images being shot by the monitoring camera are transmitted to the terminal of the security business.

In the invention set forth in Claim 7 through Claim 9, since the emergency report items and the other information are transmitted to plural terminals of the security business, a plurality of the emergency message reception units 30 are installed in order to receive various data transmitted to the security business through the Internet 40 from the emergency report unit 20.

In the processes in these cases, when the first report at Step 4 and the second report at Step 6 of the flow in Fig. 4 are transmitted, the data are transmitted to the plural emergency message reception units 30.

The data transmitted to the security business by the foregoing procedure is processed by means of the "emergency message reception program" (refer to Fig. 5) that is stored in the main storage units of the plural server computers 31 on the security business side.

The modes for carrying out the invention have been described in detail, however the concrete configuration is not limited to the aforementioned modes, and design changes without departing from the gist of the invention are also included within the scope of the invention.

Although the mode for carrying out the invention utilizes the external storage unit of a computer as the image record means for recording the still images, the image record means may be installed in the monitoring camera, or the other memory may be used.

It is also natural that the number of the still images transmitted to the security business and the concrete expressions of the emergency messages are not limited to those shown in the modes for carrying out the invention.

The security system of the invention can widely be applied not only to vending machines, but also to various types of unmanned installations such as public telephones and automatic teller machines, etc., and any objects to be guarded like general residences, establishments, and schools, etc., and any other objects calling for guarding.

The security business in this invention includes a police organization, fire station, national or local public body, and so forth, other than a business corporation that provides a security service professionally.

### INDUSTRIAL APPLICABILITY

In the invention of Claim 1 through Claim 3, at least as an equipment for reporting an emergency to be installed on the side of the object to be guarded, basically a general purpose computer, general purpose software required for the Internet communication such as a mail server and Web server, etc., and the emergency report program and so forth are only needed; and therefore, the equipment cost is considerably low. And, since the connection with the Internet is needed only when an emergency occurs, the running cost to the line rental fee and the like is extremely low.

Since the multiple packet data of the arriving emergency report items are only processed (recorded and displayed) in correspondence with the IP headers concerned, basically one telephone line is sufficient regardless of the number of the customers under the security contract; accordingly, the reception unit on the security business side can be equipped at by far a low cost compared with the conventional line controller.

The security system according to Claim 4 of the invention is very useful not only to the guarding to the object to be guarded, but also to a general prevention of crimes and fire prevention in local areas, thus demonstrating a very great significance as a social existence.

According to Claim 5 of the invention, the security business that received an emergency report message is able to grasp the circumstances of the emergency now occurring by both the images of the spot and the emergency report message; therefore, the security business is able to immediately take a more appropriate concrete measure.

According to Claim 6 of the invention, the emergency report issued to the security business from the object to be guarded can be displayed forcibly and momentarily on the monitor screen of the client computer on the security business side, which achieves an emergency report accompanying only a slight time delay to securely prevent an overlook of the report.

According to Claim 7 through Claim 9 of the invention, since one and the same report is transmitted to the plural emergency message reception units of the security business, the strong points located at plural places of the security business can take measures. Even if there are a transfiguration of the data and a failure of the reception unit and the like, this system enhances security of the data and reliability of the report.

## Claims

1. A security system using the Internet, which automatically reports information of an object to be guarded under a contract with a security business through the Internet to the security business, comprising:
a monitoring camera that shoots the object to be guarded or a surrounding area thereof;
an image record means that records image data shot by the monitoring camera;
an abnormality detection sensor that detects an emergency and other circumstances occurring at the object to be guarded;
a computer having a memory with an emergency report program stored, and at least a control circuit to execute the emergency report program; and a line connection means that connects the computer with wire communication lines including telephone lines and private lines, or with radio communication lines including radio communications and satellite communications, the security system using the Internet wherein,
the emergency report program has a function to communicate with the Internet, and includes emergency report items including at least identification data of the object to be guarded, and
in the processing thereof, when there is a signal input from the abnormality detection sensor, the system is connected to the Internet, and the emergency report items and still image data before and/or after the signal input, read from the image record means, are transmitted to a terminal of the security business.

2. A security system using the Internet, which automatically reports information of an object to be guarded under a contract with a security business through the Internet to the security business, comprising:
a monitoring camera that shoots the object to be guarded or a surrounding area thereof;
an image record means that records image data shot by the monitoring camera; an abnormality detection sensor that detects an emergency and other circumstances occurring at the object to be guarded;
a computer having a memory with an emergency report program stored, and at least a control circuit to execute the emergency report program;
and a line connection means that connects the computer with wire communication lines including telephone lines and private lines, or with radio communication lines including radio communications and satellite communications, the security system using the Internet wherein,
the emergency report program has a function to communicate with the Internet, and includes emergency report items including at least identification data of the object to be guarded, and
in the processing thereof, when there is a signal input from the abnormality detection sensor, the system is connected to the Internet, and the emergency report items and still image data before and/or after the signal input, read from the image record means, are transmitted to a terminal of the security business, and next current images being shot by the monitoring camera are transmitted to the terminal of the security business.

3. A security system using the Internet, which automatically reports information of an object to be guarded under a contract with a security business through the Internet to the security business, comprising:
a monitoring camera that shoots the object to be guarded or a surrounding area thereof;
an image record means that records image data shot by the monitoring camera;
an abnormality detection sensor that detects an emergency and other circumstances occurring at the object to be guarded;
a computer having a memory with an emergency report program stored, and at least a control circuit to execute the emergency report program;
and a line connection means that connects the computer with wire communication lines including telephone lines and private lines, or with radio communication lines including radio communications and satellite communications, the security system using the Internet wherein,
the emergency report program has a function to communicate with the Internet, and includes emergency report items including at least identification data of the object to be guarded, and
in the processing thereof, when there is a signal input from the abnormality detection sensor, the system is connected to the Internet, and the emergency report items and current images being shot by the monitoring camera are transmitted to a terminal of the security business.

4. A security system using the Internet set forth in any of Claim 1 through Claim 3, wherein the abnormality sensor is equipped with an emergency call button.

5. A security system using the Internet set forth in any of Claim 1 through Claim 4, wherein:
the emergency report items include plural emergency report messages corresponding to the types of the abnormality sensor; and
the emergency report program searches for, when there is a signal input from the abnormality sensor, one corresponding to the type of the abnormality sensor out of the emergency report messages, and transmits it.

6. A security system using the Internet set forth in any of Claim 1 through Claim 5, wherein the emergency report program is composed to transmit the emergency report items to be first transmitted to the security business at least by the chat information.

7. A security system using the Internet set forth in Claim 1 or any of Claim 4 through Claim 6, wherein, in the processing thereof, when there is a signal input from the abnormality detection sensor, the system is connected to the Internet, and the emergency report items and still image data before and/or after the signal input, read from the image record means, are transmitted to plural terminals of the security business.

8. A security system using the Internet set forth in Claim 2 or any of Claim 4 through Claim 6, wherein, in the processing thereof, when there is a signal input from the abnormality detection sensor, the system is connected to the Internet, and the emergency report items and still image data before and/or after the signal input, read from the image record means, are transmitted to a terminal of the security business, and next current images being shot by the monitoring camera are transmitted to the terminal of the security business.

9. A security system using the Internet set forth in any of Claim 3 through Claim 6, wherein, in the processing thereof, when there is a signal input from the abnormality detection sensor, the system is connected to the Internet, and the emergency report items and current images being shot by the monitoring camera are transmitted to a terminal of the security business.
